# EUROPÄISCHE PATENTANMELDUNG

(11) **EP 1 052 531 A1**
(43) Veröffentlichungstag der Anmeldung: **15.11.2000**
(21) Anmeldenummer: 00109994.4
(22) Anmeldetag: 11.05.2000
(51) Int. Cl.: G02B 6/38

(54) **Steckverbinder**

(30) Priorität: 14.05.1999 DE 19922250
(71) Anmelder: Delphi Technologies, Inc., Troy, MI 48007 (US)
(72) Erfinder: Halbach, Paul Gerhard, 42369 Wuppertal (DE); Haack, Albrecht, 42369 Wuppertal (DE); Uc, Kamil, 42115 Wuppertal (DE); Schekalla, Perter, 42369 Wuppertal (DE)
(74) Vertreter: Manitz, Finsterwald & Partner

(57) **Zusammenfassung**

Ein Steckverbinder für Lichtleiter (34) umfaßt zwei zusammensteckbare, miteinander verriegelbare Verbinderteile (16, 18), von denen zumindest eines (16) mit wenigstens einer optischen Ferrule (10) versehen ist, die bei zusammengesteckten Verbinderteilen (16, 18) gegen eine dem anderen Verbinderteil zugeordnete Anschlagsfläche (24) gehalten ist. Es ist eine Verriegelungsvorrichtung (42) vorgesehen, über die die Ferrule (10) unabhängig von der Verriegelung der beiden Verbinderteile (16, 18) direkt mit dem anderen Verbinderteil (18) verriegelbar und damit an diesem fixierbar ist.

## Beschreibung

Die Erfindung betrifft einen Steckverbinder für Lichtleiter, mit zwei zusammensteckbaren, miteinander verriegelbaren Verbinderteilen, von denen zumindest eines mit wenigstens einer optischen Ferrule, d.h. einem optischen Terminal, versehen ist, die bei zusammengesteckten Verbinderteilen gegen eine dem anderen Verbinderteil zugeordnete Anschlagsfläche gehalten ist.

Die Funktionsfähigkeit von Lichtleiter-Steckverbindern der eingangs genannten Art ist von der gegenseitigen Ausrichtung der optischen Komponenten abhängig. Eine fehlerhafte Ausrichtung dieser Komponenten kann zu größeren Lichtverlusten führen und demzufolge die Funktionsfähigkeit des gesamten Lichtleitersystems beeinträchtigen. Während die radialen Toleranzen beispielsweise durch Führen der optischen Komponenten in einem Zylinder oder in einer anderen gemeinsamen Schiene in der Regel problemlos eingehalten werden können, ist die Einhaltung der axialen Toleranzen, d.h. der axialen Abstände zwischen den beiden optischen Komponenten, relativ schwierig, da diese von dem Verriegelungssystem des Steckverbinders abhängig sind. Es hat sich gezeigt, daß engere axiale Toleranzen von beispielsweise etwa ±0,2 mm praktisch nicht mehr eingehalten werden können, wenn die Position der optischen Ferrule durch die Verbinderverriegelung bestimmt ist.

Der Erfindung liegt daher die Aufgabe zugrunde, einen Steckverbinder der eingangs genannten Art zu schaffen, bei dem der sich bezüglich der optischen Funktion ergebende Toleranzbereich auf einfache und zuverlässige Weise möglichst klein gehalten ist. Dabei soll insbesondere der sich in Axialrichtung ergebende Toleranzbereich so klein wie möglich gehalten werden.

Diese Aufgabe wird nach der Erfindung dadurch gelöst, daß eine Verriegelungsvorrichtung vorgesehen ist, über die die Ferrule unabhängig von der Verriegelung der beiden Verbinderteile direkt mit dem anderen Verbinderteil verriegelbar und damit an diesem fixierbar ist.

Aufgrund dieser Ausbildung wird der sich bezüglich der optischen Funktion ergebende Toleranzbereich auf ein Minimum reduziert, so daß nach einem jeweiligen Zusammenstecken der Verbinderteile stets eine optimale Funktion gewährleistet ist. Insbesondere der sich bezüglich der optischen Funktion in Axialrichtung ergebende Toleranzbereich wird deutlich verringert. Nachdem die Ferrule unabhängig von der Verriegelung der beiden Verbinderteile direkt mit dem anderen Verbinderteil verriegelbar und damit an diesem fixierbar ist, sind auch die axialen Toleranzen unabhängig von der Verriegelung der beiden Verbinderteile. Die beiden optischen Elemente können somit sehr genau relativ zueinander positioniert werden. Damit können insbesondere auch axiale Toleranzen kleiner oder gleich ±0,2 mm eingehalten werden. Eine der beiden unabhängig voneinander vorgesehenen Verriegelungen dient somit einer Verriegelung der Ferrule unter Einhaltung möglichst enger Toleranzen zur Erzielung einer möglichst optimalen optischen Funktion, während die andere Verriegelung zur Kopplung der beiden Verbinderteile vorgesehen ist und zur Einhaltung der üblichen Toleranzen ausgelegt sein kann. Mit der angegebenen zweistufigen Verriegelung können die optische Funktion beeinträchtigende Toleranzabweichungen auf optimale Weise kompensiert werden. Die erfindungsgemäße Doppelverriegelung ist praktisch für alle insbesondere für den Kraftfahrzeugbereich bestimmte Verbinder geeignet.

Bei dem der optischen Ferrule zugeordneten Verbinderteil kann es sich beispielsweise um ein Einsteckteil und bei dem anderen Verbinderteil beispielsweise um ein Aufnahmeteil oder einen sogenannten Header handeln. Das andere Verbinderteil kann aber auch ein der gegenseitigen Verbindung von optischen Kabeln oder Lichtleitern dienendes In-line-Gehäuse umfassen, das wie bei Stecksystemen üblich aus einem Stecker und einer Kupplung gebildet sein kann. Grundsätzlich kann die Ferrule auch mit einem dem anderen Verbinderteil zugeordneten, in diesem fixierbaren Ausrichtelement verriegelbar sein.

Bei einer bevorzugten Ausführungsform des erfindungsgemäßen Steckverbinders ist die Verriegelungsvorrichtung so ausgeführt, daß die Verriegelung der Ferrule im Verlauf einer Relativverschiebung von Ferrule und zugeordnetem Verbinderteil automatisch erfolgt. Hierbei ist es von Vorteil, wenn die Verriegelung der Ferrule mit dem anderen Verbinderteil im Verlauf des Zusammensteckens der beiden Verbinderteile zeitlich vor der gegenseitigen Verriegelung der Verbinderteile erfolgt. Die beiden voneinander unabhängigen Verriegelungen werden somit zeitlich nacheinander wirksam.

Von Vorteil ist auch, wenn die in das zugeordnete Verbinderteil eingesetzte Ferrule nach erfolgter Anlage an der Anschlagsfläche mit einem weiteren Zusammenstecken der beiden Verbinderteile entgegen einer Federkraft relativ zu dem zugeordneten Verbinderteil verschiebbar und im Verlauf dieser Relativverschiebung von Ferrule und zugeordnetem Verbinderteil mit dem anderen Verbinderteil verriegelbar ist. Dabei kann die Ferrule beispielsweise durch ein aus Gummi oder Metall bestehendes Federelement im zugeordneten Verbinderteil abgestützt sein.

Bei einer zweckmäßigen praktischen Ausführungsform umfaßt die Verriegelungsvorrichtung ein dem anderen Verbinderteil zugeordnetes federndes Verriegelungselement, das im Verlauf einer Relativverschiebung von Ferrule und zugeordnetem Verbinderteil entgegen der Federkraft mit einer an der Ferrule vorgesehenen Verriegelungsfläche in Eingriff bringbar ist. Dabei ist das federnde Verriegelungselement vorzugsweise über wenigstens eine am der Ferrule angeordneten Verbinderteil vorgesehene Verriegelungsrampe mit der Verriegelungsfläche in Eingriff bringbar. Eine solche Verriegelungsrampe kann insbesondere an einer Gehäuseinnenwand des betreffenden Verbinderteils angeordnet sein.

Das Verriegelungselement ist zweckmäßigerweise durch wenigstens einen Federdraht gebildet, der insbesondere bügelartig gebogen sein kann. Dabei ist ein solcher Federdrahtbügel zweckmäßigerweise aus einem zunächst allgemein U-förmig gebogenen Federdraht gebildet, dessen Schenkel sich allgemein in Steck- oder Axialrichtung erstrecken und dessen freie Enden allgemein in Querrichtung abgebogen und entgegen der Federkraft zusammenpreßbar sind, um mit der an der Ferrule vorgesehenen Verriegelungsfläche in Eingriff zu treten. Insbesondere zur besseren Lagerung des Federdrahtbügels kann auch der Stegbereich dieses Bügels allgemein in Querrichtung abgebogen sein.

Die Verriegelungsfläche ist vorzugsweise durch eine an der Ferrule vorgesehene Nut gebildet, bei der es sich insbesondere um eine Umfangsnut handeln kann. Bei Verwendung eines Federdrahtbügels können dessen Enden dann insbesondere von zwei entgegengesetzten Seiten her in die Umfangsnut eingebracht werden.

Bei einer bevorzugten praktischen Ausführungsform des erfindungsgemäßen Steckverbinders umfaßt das andere Verbinderteil einen Ausrichtbereich, der bei zusammengesteckten Verbinderteilen in Steck- oder Axialrichtung zwischen der Ferrule und einem Gegenelement, wie insbesondere einem elektrooptischen Module oder einer weiteren, in das andere Verbinderteil eingeführten optischen Ferrule, angeordnet ist. In diesem Fall ist die Anschlagsfläche diesem Ausrichtbereich zugeordnet. Der Ausrichtbereich kann in dem anderen Verbinderteil integriert sein. Grundsätzlich kann dieser Ausrichtbereich jedoch auch durch ein dem anderen Verbinderteil zugeordnetes, in diesem fixierbares Ausrichtelement verwirklicht sein.

Bei einer zweckmäßigen Ausführungsform ist das Gegenelement gegen eine zur Anschlagsfläche für die Ferrule entgegengesetzte Anschlagsfläche des Ausrichtbereichs gehalten.

Die Erfindung wird im folgenden anhand eines Ausführungsbeispiels unter Bezugnahme auf die Zeichnung näher erläutert; in dieser zeigen:
- Fig. 1: eine schematische, teilweise geschnittene Seitenansicht eines zwei Verbinderteile umfassenden Steckverbinders vor dem Zusammenstecken der beiden Verbinderteile,
- Fig. 2: eine schematische, perspektivische Ansicht des Steckverbinders in der in der Fig. 2 dargestellten Phase, wobei das die Ferrule aufnehmende Verbinderteil weggelassen ist und nur deren Verriegelungsrampen angedeutet sind,
- Fig. 3: eine schematische, teilweise geschnittene Seitenansicht des Steckverbinders, wobei die beiden Verbinderteile bereits so weit zusammengesteckt sind, daß die Ferrule an der Anschlagsfläche anliegt,
- Fig. 4: eine schematische, perspektivische Ansicht des Steckverbinders in der in der Fig. 3 dargestellten Phase, wobei das die Ferrule aufnehmende Verbinderteil wieder weggelassen ist,
- Fig. 5: eine schematische, teilweise geschnittene Seitenansicht des Steckverbinders, wobei die beiden Verbinderteile bereits so weit zusammengesteckt sind, daß die Ferrule mit dem anderen Verbinderteil verriegelt ist,
- Fig. 6: eine schematische, perspektivische Ansicht des Steckverbinders in der in der Fig. 5 dargestellten Phase, wobei das die Ferrule aufnehmende Verbinderteil wieder weggelassen ist,
- Fig. 7: eine vergrößerte Teildarstellung des Steckverbinders in einer Phase unmittelbar vor dem Verriegeln der Ferrule und
- Fig. 8: eine vergrößerte Teildarstellung des Steckverbinders in einer Phase, in der die Ferrule bereits mit dem anderen Verbinderteil verriegelt ist.

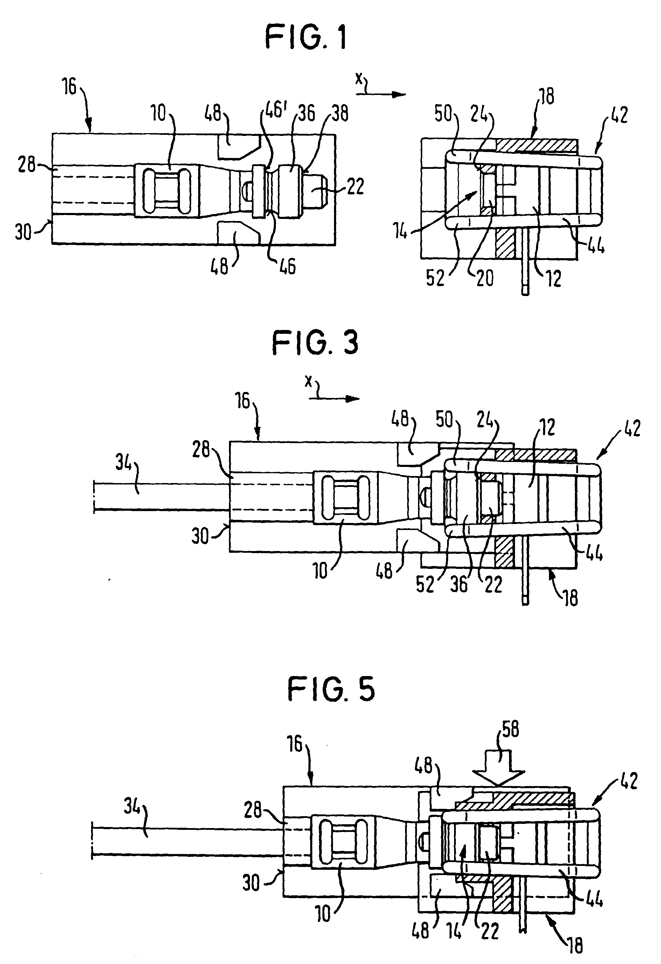

Die Fig. 1 bis 8 zeigen in schematischer, teilweise geschnittener Darstellung einen Lichtleiter-Steckverbinder mit zwei zusammensteckbaren, miteinander verriegelbaren Verbinderteilen 16, 18. Im vorliegenden Fall ist das eine Verbinderteil 16 mit zwei optischen, zwingenartigen Ferrules 10 versehen. Im anderen Verbinderteil 18 sind zwei elektrooptische Module 12 untergebracht. Unter einem elektrooptischen Module ist hierbei ein beliebig ausgeführtes Modul zu verstehen, in dem optische Signale in elektrische Signale und/oder elektrische Signale in optische Signale umgewandelt werden.

Das die optischen Ferrules 10 aufnehmende Verbinderteil 16 kann beispielsweise als Steckteil und das die elektrooptischen Module 12 aufnehmende Verbinderteil 18 beispielsweise als Aufnahmeteil vorgesehen sein. Das Verbinderteil 16 kann somit insbesondere als sogenannter Header vorgesehen sein. Dieses Verbinderteil 16 kann grundsätzlich aber auch ein der gegenseitigen Verbindung von optischen Kabeln oder Lichtleitern dienendes In-line-Gehäuse umfassen, an dessen beiden Enden jeweils ein Einsteckteil einsteckbar ist.

Mit dem Zusammenstecken der Verbinderteile 16, 18 werden die optischen Ferrules 10 und die diesen als Gegenelemente gegenüberliegenden elektrooptischen Module 12 über einen Ausrichtbereich 14 gegenseitig ausgerichtet, der im vorliegenden Fall im Verbinderteil 18 integriert ist. Grundsätzlich kann ein solcher Ausrichtbereich aber auch beispielsweise durch ein in dem Verbinderteil 18 fixierbares Ausrichtelement verwirklicht sein. Bei zusammengesteckten Verbinderteilen 16, 18 ist der Ausrichtbereich 14 in Steck- oder Axialrichtung x zwischen den optischen Ferrules 10 und den elektrooptischen Modulen 12 angeordnet. Der Ausrichtbereich 14 besitzt Öffnungen 20, durch die hindurch sich ein jeweiliger axialer Ansatz 22 der optischen Ferrules hindurch erstreckt. Auf einander entgegengesetzten Seiten ist der Ausrichtbereich 14 mit quer zur Axialrichtung x verlaufende Anschlagsflächen 24 und 26 versehen, an denen bei zusammengesteckten Verbinderteilen 16, 18 die beiden optischen Ferrules 10 bzw. die beiden elektrooptischen Module 12 anliegen. Die optischen Ferrules 10 sowie die elektrooptischen Module 12 können insbesondere federnd gegen die betreffenden Anschlagsflächen 24 und 26 gehalten sein.

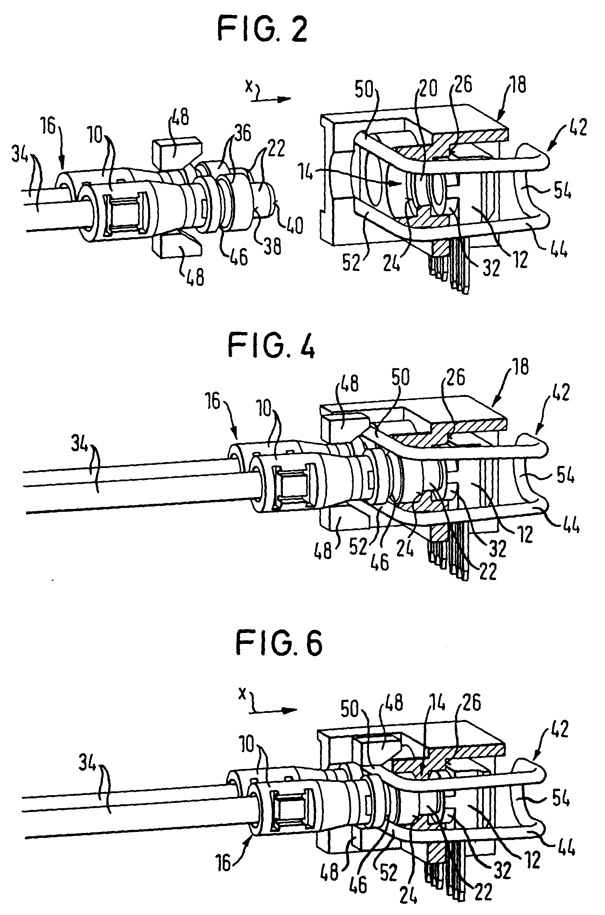

Wie insbesondere anhand der Fig. 2, 4 und 6 zu erkennen ist, sind die elektrooptischen Module 12 jeweils mit einer Steckaufnahme 32 versehen, in die bei zusammengesteckten Verbinderteilen 16, 18 das mit einer Abschrägung 40 versehene freie Ende des axialen Ansatzes 22 der betreffenden optischen Ferrule 10 hineinragt. Innerhalb der Steckaufnahmen 32 der elektrooptischen Module 12 liegt dann das betreffende Lichtleiterende dem betreffenden optischen Ausgang des jeweiligen elektrooptischen Modules 12 gegenüber.

Wie bereits erwähnt, kann das jeweilige Gegenelement anstatt durch ein elektrooptisches Module 12 auch durch ein optisches Ferrule gebildet sein, das beispielsweise den gleichen Aufbau wie die in dem Verbinderteil 16 aufgenommenen Ferrules 10 besitzen kann. In diesem Fall kann das Verbinderteil 18 somit ein der gegenseitigen Verbindung von optischen Kabeln dienendes In-line-Gehäuse umfassen, an dessen beiden Enden jeweils ein Einsteckteil 16 einsteckbar ist.

Wie insbesondere anhand der Fig. 2, 4 und 6 zu erkennen ist, sind die elektrooptischen Module 12 gegen zu den Anschlagsflächen 24 für die optischen Ferrules 10 entgegengesetzte Anschlagsflächen 26 des Ausrichtbereichs 14 gehalten.

Die zwingenartigen optischen Ferrules 10 bewegen sich beim Zusammenstecken der beiden Verbinderteile 16, 18 jeweils gegen die betreffende Anschlagsfläche 24 des Ausrichtbereichs 14. Die betreffenden Anpreßmittel umfassen im vorliegenden Fall wenigstens ein Federelement 28, über die die optischen Ferrules 10 an der Gehäuserückwand 30 des Verbinderteils 16 abgestützt sind (vgl. insbesondere die Fig. 1, 3 und 5). Den beiden optischen Ferrules 10 können getrennte Federelemente 28 oder auch ein gemeinsames Federelement 28 zugeordnet sein.

Wie am besten anhand der Fig. 1 und 2 zu erkennen ist, sind die optischen Ferrules 10 jeweils mit einem Ringflansch 36 versehen, der eine radiale Stirnfläche 38 besitzt, mit der das jeweilige Ferrule 10 an der Anschlagsfläche 24 des Ausrichtbereichs 14 in Anlage kommt.

In den Fig. 2 bis 6 sind die mit den optischen Ferrules 10 versehenen Lichtleiter 34 zu erkennen.
Für die beiden optischen Ferrules 10 ist eine Verriegelungsvorrichtung 42 vorgesehen, über die die Ferrules 10 unabhängig von der Verriegelung für die beiden Verbinderteile 16, 18 direkt mit dem anderen Verbinderteil 18 verriegelbar und an diesem fixierbar sind.

Diese Verriegelungsvorrichtung 42 ist so ausgeführt, daß die Verriegelung der Ferrules 10 im Verlauf einer Relativverschiebung zwischen den Ferrules 10 und dem zugeordneten Verbinderteil 16 automatisch erfolgt. Zudem erfolgt im vorliegenden Fall die Verriegelung der Ferrules 10 im Verlauf des Zusammensteckens der beiden Verbinderteile 16, 18 zeitlich vor der gegenseitigen Verriegelung der Verbinderteile 16, 18.

Die in das zugeordnete Verbinderteil 16 eingesetzten optischen Ferrules 10 sind nach erfolgter Anlage an der jeweiligen Anschlagsfläche 24 des Ausrichtbereichs 14 mit einem weiteren Zusammenstecken der beiden Verbinderteile 16, 18 entgegen der Kraft des betreffenden Federelements 28 relativ zu dem zugeordneten Verbinderteil 16 verschiebbar und im Verlauf dieser Relativverschiebung von Ferrules 10 und zugeordnetem Verbinderteil 16 mit dem anderen Verbinderteil 18 verriegelbar.

Dazu umfaßt die Verriegelungsvorrichtung 42 ein dem anderen Verbinderteil 18 zugeordnetes federndes Verriegelungselement 44, das im Verlauf der Relativverschiebung von Ferrules 10 und zugeordnetem Verbinderteil 16 entgegen der Federkraft mit einer an der jeweiligen Ferrule 10 vorgesehenen Verriegelungsfläche 46' in Eingriff bringbar ist.

Im vorliegenden Fall ist das federnde Verriegelungselement 44 über innerhalb des Verbinderteils 16 vorgesehene, fest mit diesem verbundene Verriegelungsrampen 48 mit der Verriegelungsfläche 46' in Eingriff bringbar.

Das Verriegelungselement 44 ist beim vorliegenden Ausführungsbeispiel durch einen bügelartig gebogenen Federdraht gebildet. Dabei besteht dieser Federdrahtbügel 44 aus einem zunächst allgemein U-förmig gebogenen Federdraht, dessen Schenkel sich allgemein in Steck- oder Axialrichtung x erstrecken und dessen freie Enden 50, 52 allgemein in Querrichtung abgebogen und entgegen der Federkraft zusammenpreßbar sind, um mit den an der Ferrule 10 vorgesehenen Verriegelungsflächen 46' in Eingriff zu treten. Wie insbesondere anhand der Fig. 2, 4 und 6 zu erkennen ist, kann auch der Stegbereich 54 des Federdrahtbügels 44 allgemein in Querrichtung abgebogen sein.

Die an einer jeweiligen optischen Ferrule 10 vorgesehene Verriegelungsfläche 46' ist im vorliegenden Fall durch eine an der betreffenden Ferrule 10 vorgesehene Nut, nämlich eine Umfangsnut 46, gebildet.

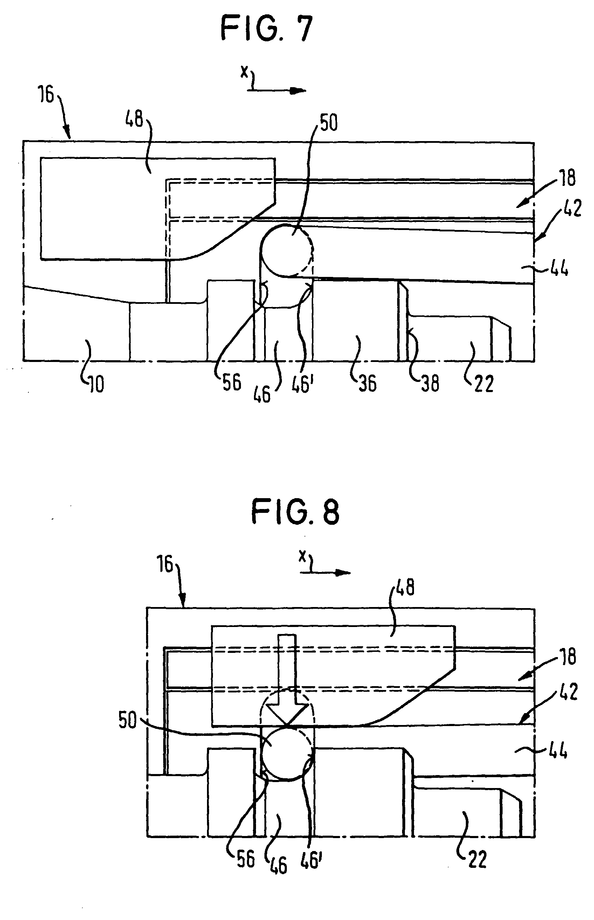

Wie insbesondere anhand der Figuren 7 und 8 zu erkennen ist, sind die mit der Umfangsnut 46 zusammenwirkenden abgebogenen freien Enden 50, 52 des Federdrahtbügels 44 in einem in dem Verbinderteil 16 vorgesehenen radialen Schlitz 56 geführt.

Die den optischen Ferrules 10 zugeordnete Verriegelungsvorrichtung 42 kann während der Montage des Steckverbinders beispielsweise in einen insbesondere durch ein Formteil oder dergleichen gebildeten optischen Hohlraum eingebracht werden.

Die Fig. 1 und 2 zeigen den Steckverbinder in einer Phase vor dem Zusammenstecken der beiden Verbinderteile 16, 18. Das Federelement 28 ist in diesem Fall noch entspannt.

Werden die beiden Verbinderteile 16, 18 zusammengesteckt, so kommen zunächst die optischen Ferrules 10 in Anlage an den Anschlagsflächen 24 des anderen Verbinderteils 18 (vgl. die Fig. 3 und 4). Das bzw. die Federelemente 28 sind weiterhin entspannt. Die optischen Ferrules 10 nehmen somit innerhalb des Gehäuses des Verbinderteils 16 weiterhin ihre vordere Ausgangsposition ein, in der sie beispielsweise gemäß Fig. 3 relativ zum Verbinderteil 16 am weitesten nach rechts verlagert sind.

Fig. 7 zeigt eine vergrößerte Teildarstellung des Steckverbinders in einer Phase unmittelbar vor dem Verriegeln der Ferrules 10. Die abgebogenen freien Enden 50, 52 des Federbügels 44 liegen somit noch außerhalb der Umfangsnut 46 der Ferrules 10.

Werden die beiden Verbinderteile 16, 18 nun weiter zusammengesteckt, so werden die beiden abgebogenen freien Enden 50, 52 des Federbügels 44 durch die innen am Verbinderteil 16 vorgesehenen Verriegelungsrampen 48 zusammengedrückt und in die Umfangsnuten 46 der optischen Ferrules 10 eingeführt (vgl. insbesondere die Fig. 5, 6 und 8). Dabei werden sie innerhalb des in dem anderen Verbinderteil 18 vorgesehenen Schlitz 56 geführt (vgl. insbesondere die Fig. 7 und 8). Damit kommen die beiden abgebogenen freien Federenden 50, 52 in Anlage an die durch die Umfangsnuten 46 gebildeten Verriegelungsflächen 46' (vgl. insbesondere Fig. 8). Wie anhand der Fig. 7 und 8 zu erkennen ist, besitzen diese Verriegelungsflächen 46' der im Querschnitt allgemein U-förmigen Umfangsnuten 46 im vorliegenden Fall einen gekrümmten Verlauf.

Die Verriegelung der optischen Ferrules 10 erfolgt zeitlich vor einer Verriegelung der Gehäuse der beiden Verbinderteile 16, 18. Die diesen beiden Verbinderteilen 16, 18 zugeordnete Verriegelung ist in der Fig. 5 mit dem Bezugszeichen 58 versehen und lediglich durch einen Pfeil angedeutet.

Die relevanten Toleranzen ergeben sich beim vorliegenden Ausführungsbeispiel somit lediglich noch durch die jeweiligen Abmessungen der elektrooptischen Module, des Headers, der Feder sowie der Ferrules. Die Ferrules werden am zweiten Verbinderteil fixiert. Auch bei einer entsprechenden Zugbelastung ist ausgeschlossen, daß irgendein störender Spalt auftritt. Nachdem der gesamte Koppelvorgang in einer einzigen Bewegung erfolgen kann, ist der Steckverbinder sehr einfach handhabbar.

### Bezugszeichenliste

- 10: optisches Ferrule
- 12: elektrooptisches Modul
- 14: Ausrichtbereich
- 16: Verbinderteil
- 18: Verbinderteil
- 20: Öffnung
- 22: axialer Ansatz
- 24: Anschlagsfläche
- 26: Anschlagsfläche
- 28: Federelement
- 30: Rückwand
- 32: Steckaufnahme
- 34: Lichtleiter
- 36: Ringflansch
- 38: radiale Stirnfläche
- 40: Abschrägung
- 42: Verriegelungsvorrichtung
- 44: federndes Verriegelungselement, Federdrahtbügel
- 46: Umfangsnut
- 46': Verriegelungsfläche
- 48: Verriegelungsrampe
- 50: freies Federende
- 52: freies Federende
- 54: Stegbereich
- 56: Schlitz
- 58: Verriegelung für Verbinderteile
- x: Steck- oder Axialrichtung

## Patentansprüche

1. Steckverbinder für Lichtleiter, mit zwei zusammensteckbaren, miteinander verriegelbaren Verbinderteilen (16, 18), von denen zumindest eines (16) mit wenigstens einer optischen Ferrule (10) versehen ist, die bei zusammengesteckten Verbinderteilen (16, 18) gegen eine dem anderen Verbinderteil (18) zugeordnete Anschlagsfläche (24) gehalten ist,
dadurch **gekennzeichnet,**
daß eine Verriegelungsvorrichtung (42) vorgesehen ist, über die die Ferrule (10) unabhängig von der Verriegelung (58) der beiden Verbinderteile (16, 18) direkt mit dem anderen Verbinderteil (18) verriegelbar und damit an diesem fixierbar ist.

2. Steckverbinder nach Anspruch 1,
dadurch **gekennzeichnet,**
daß die Verriegelungsvorrichtung (42) so ausgeführt ist, daß die Verriegelung der Ferrule (10) im Verlauf einer Relativverschiebung von Ferrule (10) und zugeordnetem Verbinderteil (16) automatisch erfolgt.

3. Steckverbinder nach Anspruch 2,
dadurch **gekennzeichnet,**
daß die Verriegelung der Ferrule (10) mit dem anderen Verbinderteil (18) im Verlauf des Zusammensteckens der beiden Verbinderteile (16, 18) zeitlich vor der gegenseitigen Verriegelung der Verbinderteile (16, 18) erfolgt.

4. Steckverbinder nach einem der vorhergehenden Ansprüche,
dadurch **gekennzeichnet,**
daß die in das zugeordnete Verbinderteil (16) eingesetzte Ferrule (10) nach erfolgter Anlage an der Anschlagsfläche (24) mit einem weiteren Zusammenstecken der beiden Verbinderteilen (16, 18) entgegen einer Federkraft relativ zu dem zugeordneten Verbinderteil (16) verschiebbar und im Verlauf dieser Relativverschiebung von Ferrule (10) und zugeordnetem Verbinderteil (16) mit dem anderen Verbinderteil (18) verriegelbar ist.

5. Steckverbinder nach einem der vorhergehenden Ansprüche,
dadurch **gekennzeichnet,**
daß die Verriegelungsvorrichtung (42) ein dem anderen Verbinderteil (18) zugeordnetes federndes Verriegelungselement (44) umfaßt, das im Verlauf einer Relativverschiebung von Ferrule (10) und zugeordnetem Verbinderteil (16) entgegen der Federkraft mit einer an der Ferrule (10) vorgesehenen Verriegelungsfläche (46) in Eingriff bringbar ist.

6. Steckverbinder nach Anspruch 5,
dadurch **gekennzeichnet,**
daß das federnde Verriegelungselement (44) über wenigstens eine am der Ferrule (10) zugeordneten Verbinderteil (16) vorgesehene Verriegelungsrampe (48) mit der Verriegelungsfläche (46) in Eingriff bringbar ist.

7. Steckverbinder nach Anspruch 5 oder 6,
dadurch **gekennzeichnet,**
daß das Verriegelungselement (44) durch wenigstens einen Federdraht gebildet ist.

8. Steckverbinder nach Anspruch 7,
dadurch **gekennzeichnet,**
daß der Federdraht bügelartig gebogen ist.

9. Steckverbinder nach Anspruch 8,
dadurch **gekennzeichnet,**
daß der Federdrahtbügel (44) aus einem zunächst allgemein U-förmig gebogenen Federdraht gebildet ist, dessen Schenkel sich allgemein in Steck- oder Axialrichtung (x) erstrecken und dessen freie Enden (50, 52) allgemein in Querrichtung abgebogen und entgegen der Federkraft zusammenpreßbar sind, um mit der an der Ferrule (10) vorgesehenen Verriegelungsfläche (46') in Eingriff zu treten.

10. Steckverbinder nach Anspruch 9,
dadurch **gekennzeichnet,**
daß auch der Stegbereich (54) des Federdrahtbügels (44) allgemein in Querrichtung abgebogen ist.

11. Steckverbinder nach einem der vorhergehenden Ansprüche,
dadurch **gekennzeichnet,**
daß die Verriegelungsfläche (46') durch eine an der Ferrule (10) vorgesehene Nut (44) gebildet ist.

12. Steckverbinder nach Anspruch 11,
dadurch **gekennzeichnet,**
daß die Nut durch eine Umfangsnut (46) gebildet ist.

13. Steckverbinder nach einem der vorhergehenden Ansprüche,
dadurch **gekennzeichnet,**
daß das andere Verbinderteil (18) einen Ausrichtbereich (14) umfaßt, der bei zusammengesteckten Verbinderteilen (16, 18) in Steck- oder Axialrichtung (x) zwischen der Ferrule (10) und einem Gegenelement (12) wie insbesondere einem elektrooptischen Modul (12) oder einer weiteren, in das andere Verbinderteil (18) eingeführten optischen Ferrule angeordnet ist, und daß die Anschlagsfläche (24) dem Ausrichtbereich (14) zugeordnet ist.

14. Steckverbinder nach einem der vorhergehenden Ansprüche,
dadurch **gekennzeichnet,**
daß das Gegenelement (12) gegen eine zur Anschlagsfläche (24) für die Ferrule (10) entgegengesetzte Anschlagsfläche (26) des Ausrichtbereichs (14) gehalten ist.
